Europäisches Patentamt

(19) European Patent Office

Office européen des brevets

(11) Publication number: **0 114 502**
**B1**

(12) **EUROPEAN PATENT SPECIFICATION**

(45) Date of publication of patent specification: **16.09.87**

(51) Int. Cl.⁴: **B 60 T 13/18, B 60 T 17/02**

(21) Application number: **83307821.5**

(22) Date of filing: **21.12.83**

(54) Hydraulic braking systems.

(30) Priority: **21.12.82 GB 8236303**

(43) Date of publication of application:
**01.08.84 Bulletin 84/31**

(45) Publication of the grant of the patent:
**16.09.87 Bulletin 87/38**

(84) Designated Contracting States:
**DE FR GB IT**

(56) References cited:
**EP-A-0 015 689**
**EP-A-0 020 105**
**DE-A-2 717 224**
**DE-C- 696 204**

(73) Proprietor: **CLAYTON DEWANDRE COMPANY LIMITED**
**P.O. Box 9 Titanic Works**
**Lincoln, LN5 7JL (GB)**

(72) Inventor: **Knowles, James Grahame**
**10, Musgraves Orchard**
**Welton Lincoln, LN 3NP (GB)**

(74) Representative: **Hartley, David et al**
**c/o Withers & Rogers 4 Dyer's Buildings Holborn**
**London, EC1N 2JT (GB)**

Courier Press, Leamington Spa, England.

## Description

This invention relates to vehicle braking circuits.

Hydraulic systems such as power steering systems now use energy saving pressure and flow compensated pumps. These are variable volume pumps which use load sensing pilot lines, from each hydraulic load in the system, to regulate the flow and pressure output from the pump to that required by the load, thereby reducing to a minimum the pressure and flow excesses produced by both constant flow and constant pressure systems.

However, since the load sensing pilot lines require a flow of fluid sufficient to provide an adequate pump response, and to overcome leakages, then control valves used in the system must be re-designed to provide such pilot flows.

This present invention arises because of the trend to use energy saving pressure and flow compensated pumps for vehicle mounted auxiliary hydraulic systems and aims to enable such pumps to be used also for the supply of pressure fluid to vehicle braking systems.

Systems which are designed to save energy by reducing pump output at a predetermined pressure are already known. Two such systems suitable for use in braking are disclosed in DE—A—2717224 and DE—C—696204.

In DE—A—2717223 the inlet of an air compressor system is throttled at a pre-set pressure and the drive motor switched off at a slightly higher pressure.

In the braking system disclosed in DE—C—696204, corresponding to the preamble of claim 1, the electrically driven pump is switched off at full braking pressure and reversed to reduce the braking pressure.

By contrast the present invention is concerned to provide a vehicle braking system having a brake valve controlling the application of pressure fluid to operate the vehicle brakes and supplied with fluid under pressure by a pump having associated therewith means to reduce the pump output when a high braking pressure is not required, which is characterised in that the output flow and pressure of the pump is controlled so as to maintain a predetermined differential between the pump output pressure and the braking pressure whatever the braking pressure.

Unlike power steering circuits in which large displacements occur, large flows are required in braking systems only to "fill" the braking circuits and raise the system pressure. Once this has been achieved relatively small flows are sufficient to maintain and increase the system pressure up to maximum delivery pressure.

To this end, the braking system of this invention includes a device, preferably a combined restrictive and by-pass flow control valve, for operating a substantially constant pilot flow to the brake valve and a switch in the main flow line to the brake valve, which switch is responsive to cut-off the main flow, when the pressure of fluid delivered to the brake valve exceeds a predetermined value.

With this arrangement, the main flow is available rapidly to "fill" the braking circuit, but is shut-off when a predetermined pressure is exceeded after which the output of the pump is adjusted to maintain only the pilot flow whereby the pressure applied to the brakes is increased in accordance with the demand.

The brake valve may be operable directly or indirectly by means of a foot pedal, or may for example, in the case of a trailer braking system to which the present invention is particularly suited, be operable in response to the pressure applied to the tractor brakes.

A control inlet of the pump, which is preferably a pressure and flow compensated pump of the kind referred to above, is connected to the pilot flow, and, when the pump is supplying any auxiliary hydraulic systems, also to the pilot flow associated with the auxiliary system or systems. A check valve is interposed between the pilot flows to the braking circuit and the auxiliary circuits whereby the pump is able to respond to a high pressure pilot flow or signal in the auxiliary circuit(s).

Embodiments of the present invention will now be described by way of example with reference to the accompanying drawings of which:

Figure 1 is a diagram of a load sensing trailer brake valve circuit;

Figure 2 illustrates a preferred form of the circuit shown in Figure 1;

Figure 3 is a diagram of another load sensing trailer brake valve circuit.

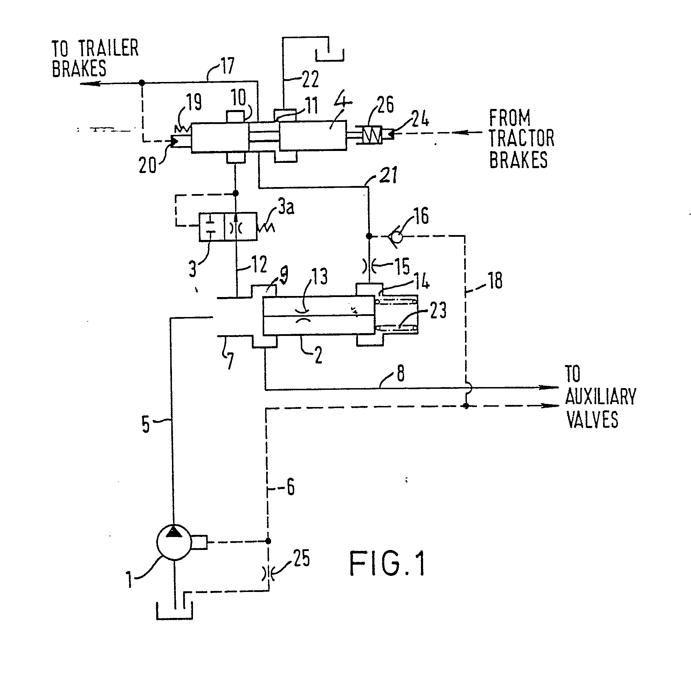

With reference to Figure 1, the circuit comprises a pressure and flow compensated pump 1, a combined restrictive and by-pass flow control valve 2, a switched orifice 3, and a brake spool 4. The functioning of a pressure and flow compensated pump is well known; suffice it to say that its output is automatically adjusted to give a constant 14—28 bar pressure difference between the supply line 5 and the load sensing pilot line 6.

The load sensing trailer brake valve then performs as follows. With the trailer brakes "off" and the brake spool 4 in its non selected position, as shown in Figure 1, fluid enters port 7, passes across the combined restrictive and by-pass flow control valve 2 at metering point 9, and flows along line 8 to any auxiliary valves in the circuit. Since the brake spool 4 is closed at the 'pressure-to-brake' orifice 10, no fluid flows along line 12. A small flow of fluid passes through orifice 13 in the combined restrictive and by-pass flow control valve 2, across the metered orifice 14 and a damping orifice (15) and via pilot line (21) to the brake valve comprising the brake spool 4. Since the tractor brakes are in the 'off' position, the 'brake-to-return' orifice 11 is fully open and provides minimal resistance to the flow of fluid passing along lines 21 and 22. Therefore the pressure in brake line 17 is very low (less than 1 bar).

If the auxiliary valves are not in use, and hence their pressure demand is low, check valve 16 in the load sensing line 18 will be open and low pressure fluid from line 21 will also pass to the pressure and flow compensated pump 1, signalling a low pressure demand by the trailer brake valve.

If the pressure demand from the auxiliary valves is high, the check valve 16 will be closed and the pump will respond to the high pressure signal in the load sensing line 6 from the auxiliary valves.

The design of the combined restrictive and bypass flow control valve 2 is such that the pressure difference across the spool is maintained fairly constant by the spring 23, and hence the small flow of fluid across orifice 13 is also held substantially constant, regardless of load pressure on lines 8 and 21. When the pressure in line 8 is greater than the pressure in line 21, the valve performs as a restrictive flow control valve and meters fluid at orifice 14. When the pressure difference between lines 8 and 21 is reversed, the valve performs as a by-pass flow control valve and meters the excess flow at orifice 9.

Therefore the fluid flow through the trailer brake valve (with the tractor brakes in the off position), is maintained fairly constant and is designed to be small (1—2 l/min), thereby keeping power losses low.

When the tractor brakes are applied, the brake spool 4 is selected to open the 'pressure-to-brake' orifice 10 and to close the 'brake-to-return' orifice 11 by the force of the tractor brake pressure acting on servo piston 24. Flow to the brake line 17 is then supplied via 2 parallel lines, 12 and 21. Fluid flow along line 21 is controlled by the combined restrictive and by-pass flow control valve 2 as previously explained. Flow along line 12 is controlled by the switched orifice 3, which is held open by its spring 3a and is designed to be relatively large (approximately 20 l/min minimum).

With no load demand from the auxiliary valves and check valve 16 open, the constant pressure differential between lines 5 and 6, maintained by the pump, is reflected across switched orifice 3, and hence determines the minimum flow in line 12. With a higher load demanded by the auxiliary valves, the pressure drop across the switched orifice 3 is increased and so therefore is the flow to the brake line.

Study of the brake line pressure/flow characteristics shows that as fluid enters the brake line, the pressure remains relatively low, until all the brake travel is taken up, and then the pressure rises steeply. That is, the brake line stiffness is low whilst the brake line is being 'filled' and the stiffness is high thereafter.

The large flow along line 12 therefore quickly 'fills' the brake line giving a total response time of less than one second. As the brake pressure rises above the 'filled' pressure, the force of return spring 3a is overcome and the switched orifice 3 closes. The brake line is then supplied only by the small controlled flow along line 21. Initial closing of the switched orifice 3 causes a pressure rise in supply line 5 and the pressure and flow compensated pump automatically adjusts its output flow to maintain its 14—28 bar differential (supply line 5 to load sensing line 6), and the pressure peak in line 5 then decays.

Pressure in trailer brake line 17 continues to rise, supplied by the small controlled flow in line 21, until the pressure acting on brake spool piston 20 is greater than the pressure supplied by the tractor brakes acting on servo piston 24. Brake spool 4 then moves 'out', opening the brake-to-return orifice 11, and consequently relieving the brake pressure until the forces of the two pistons are balanced, and the flow is metered by orifice 11 and passes along line 22 to return.

Further increase or decrease in the tractor brake pressure, either closes or opens brake-to-return orifice 11 and raises or lowers the trailer brake pressure until the brake spool is again in balance.

Orifice 11 of brake spool 4, therefore acts as a variable relief valve, and maintains a constant brake line pressure for a given tractor brake pressure. And since it only meters the small controlled flow in line 21, essentially constant regardless of pump flow, pressure and engine speed, it produces a very stable and responsive system. Also since the flow is low and the load sensing pressure is equal to the brake line pressure, the power loss through the valve is minimal.

To prevent over pressurisation of the brake line 17, a pressure limit spring 26 is inserted between the servo piston 24 and the brake spool 4. At brake pressures greater than the spring setting pressure, the pressure limit spring 'collapses', allowing excess tractor brake pressure to be exerted on the valve body.

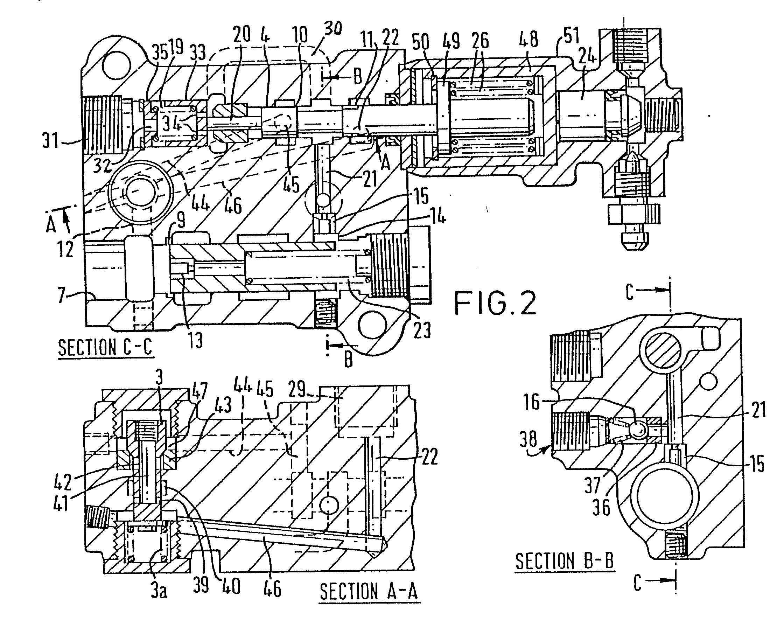

A preferred embodiment of the Figure 1 circuit is shown in Figure 2, and functions as follows. With the tractor brakes 'off', brake spool 4, section C—C, is fully 'out', i.e. pressure-to-brake orifice 10 is closed and brake-to-return orifice 11 is open. Fluid from the pump enters the valve at port 7, a small flow passes through orifice 13 in combined restrictive and by-pass flow control valve spool 2, is metered by restrictive orifice 14, and flows through damping orifice -15 and drilling 21 to brake spool 4. It then flows, via the fully open brake-to-return orifice 11, through drilling 22 and out to a low pressure drain at return port 29. Brake port 31 is permanently connected to drilling 21 via hole 32 in spring plate 35, holes 34 in spring piston 33 and cored passage 30. The flow in drilling 21 is substantially constant, regardless of pump flow, pressure and speed, and is controlled by the combined restrictive and by-pass flow control spool 2, as previously explained, it is designed to be relatively small in order to minimise power losses. The 'brake-to-return' orifice 11 is sufficiently large to ensure that the brake pressure is very low.

Brake line pressure is reflected back to the pressure and flow compensated pump, when the auxiliary valves are not in use, via check valve 16 and load sensing port 38. Check valve ball 16 is held against its seat 36 by a light spring 37, and offers little resistance to the small signal flow passing to the pump.

Since the pressure-to-brake orifice 10 in brake valve 4 is closed, no fluid flows along drilling 12 and through switched orifice 3.

When the tractor brakes are applied, the brake spool 4 is selected to open the pressure-to-brake orifice 10 and to close the brake-to-return orifice 11, by the force of the tractor brake pressure acting on servo piston 24. Fluid then flows via drilling 12, into annular chamber 40, around switched orifice valve 3, through the open orifice holes 39, into central drilling 41, out through cross holes 42, across the open valve orifice 47, formed by valve spool 3 and valve seat 43, and into drilling 44 and 45 leading to brake spool 4. This flow of fluid is designed to be relatively large, as previously described and passes via the open pressure-to-brake orifice 10, passage 30, holes 34 and 32 to brake port 31. The small controlled flow in drilling 21 combines with the relatively large flow in passage 30 and also flows into the brake line via brake port 31. Brake line stiffness is low whilst the brake line is being 'filled' and the stiffness is high thereafter when the brake travel has been taken up. Since the flow into the brake line is relatively large, the time taken to 'fill' the line and to take up the brake clearance, is short, i.e. the response time is short. As the brake pressure rises above the 'filled' pressure, the force of the return spring 3a, acting on the switched orifice spool 3, is overcome and valve orifice 47, formed by spool 3 and seat 43, is closed. The spring end of spool 3 is connected via drillings 46 and 22 to return port 29 and therefore senses only the low return line pressure. Hence the relatively large flow in drilling 12 is switched off and the pump automatically reduces its output to supply only the small controlled flow in drilling 21 plus the flow requirements of the auxiliary valves.

The trailer brake pressure continues to rise until the force on reaction piston 20 is greater than the force produced by the tractor brake pressure acting on servo piston 24. Brake spool 4 then moves 'out' until the small controlled flow in drilling 21 is metered by the opening brake-to-return orifice 11 and the opposing forces on reaction piston 20 and servo piston 24 are balanced. In this stage of equilibrium a constant trailer brake pressure is produced which is directly related to the tractor brake pressure, and since the supply flow is small the power loss is minimal.

Further increase or decrease in tractor brake pressure, either closes or opens the brake-to-return orifice 11 and raises or lowers the trailer brake pressure until the brake spool 4 is again in balance. Orifice 11, therefore, meters the substantially constant flow in drilling 21, to generate trailer brake pressure, and in conjunction with reaction piston 20 and servo piston 24 acts as a simple relief valve, to give a very stable and responsive system.

To prevent over pressurisation of the trailer brake line, under conditions of very high tractor brake pressures, a collapsible spring box assembly is inserted between servo piston 24 and brake spool 4. The assembly comprises of a spring housing 48, slidably mounted in servo cylinder 51, a spring plate 49, and pressure limit springs 26 which are constrained by a circlip 50. When the forces between the brake spool 4 and servo piston 24 exceed the pre-load of springs 26, they compress allowing spring housing 48 and servo piston 24 to travel to the 'left' until housing 48 abuts against the valve body. Excess tractor brake pressure is then transmitted through to the valve body and not the brake spool 4 and the trailer brake pressure is therefore limited to the equivalent value of the springs 26 pre-load.

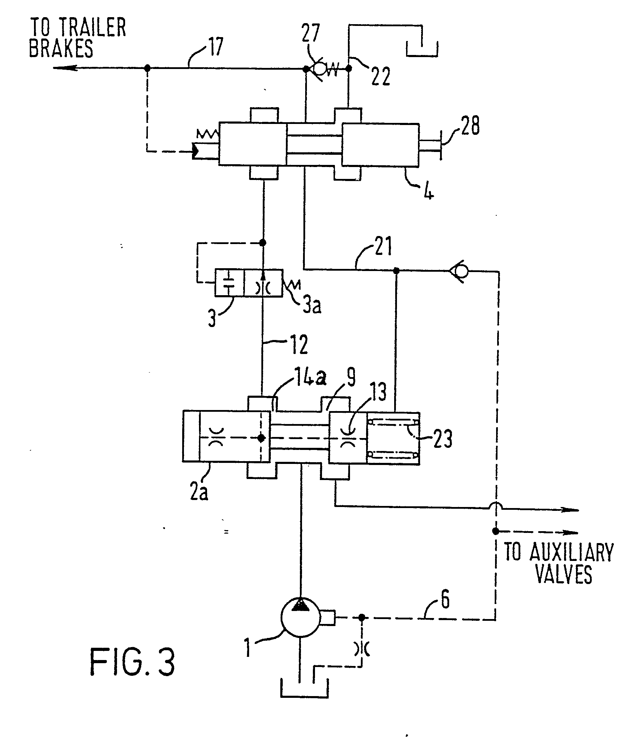

Figure 3 shows an alternative load sensing trailer brake valve circuit where the combined restrictive and by-pass flow control valve 2 is then replaced by a similar valve 2a. In this case, the relatively large flow in line 12 is metered by the restrictive orifice 14a, together with the small controlled flow in line 21. And the constant pressure drop, produced by return spring 23, across spool 2, is reflected across both orifice 13 and switched orifice 3. This maintains a fairly constant flow in line 12 as well as in line 21, regardless of the load demand of the auxiliary valves.

The functioning of the switched orifice 3 and the brake spool 4 is exactly as previously described in Figure 1. Brake pressure in Figure 3 is limited by relief valve 27, connected between the brake line 17 and the return line 22, instead of the pressure limit springs 26 in Figure 2. Also brake spool 4 is operated by manual means 28.

## Claims

1. A vehicle braking system in which pressure fluid to operate the vehicle brakes is supplied by a pump (1) having associated therewith means (2, 6) to reduce the pump output when a high braking pressure is not required, characterised in that the pump output is supplied to a brake valve (4) controlling the braking pressure, and the output flow and pressure of the pump is controlled so as to maintain a predetermined differential between the pump output pressure and the braking pressure, whatever the braking pressure.

2. A system according to claim 1 wherein said means (2, 6) comprises a restrictive flow control valve (2) providing a substantially constant pilot flow in a pilot line (21) to the brake valve (4), and a switch (3) in a main flow line (12) to the brake valve, which switch (3) is operable to cut-off the main flow when the pressure of fluid delivered to the brake valve exceeds a predetermined value.

3. A system according to claim 2 wherein the pump (1) is a pressure and flow compensated pump of the kind which maintains a predetermined differential between the delivery pressure (5) thereof and the pressure applied to a control port, the control port being connected to the said pilot line (21).

4. A system according to claim 3 wherein an auxiliary hydraulic system or systems is/are also supplied by the pump (1), a pilot flow line associated with the auxiliary hydraulic system or systems being connected to the pilot flow to the brake valve (4) via a check valve (16) which closes in response to a high pressure signal from the auxiliary system or systems.

5. A system according to any one of claims 2 to 4 wherein the restrictive flow control valve (2) comprises a spool the opposite sides of which communicate via a pilot flow orifice (13) and which is biased in opposition to the pressure in the main flow line (12) upstream of the switch (3) acting on one side of the spool (2) and having a restrictive orifice (14) metering the pilot flow so as to maintain the pilot flow substantially constant.

6. A system according to claim 5 wherein the main flow (12) and the pilot flow (21) together are metered by the restrictive orifice (14a) upstream of the pilot flow orifice (13).

7. A system according to claim 5 or claim 6 as appendant to claim 3, the restrictive flow control valve (2) having a by-pass orifice (9) metering the flow to the auxiliary system or systems.

8. A system according to any one of claims 2 to 7 wherein the brake valve input corresponding to the braking demand (24) and applied to a spool (4) in opposition to the pressure applied to the brakes (20), the spool (4) being operable to connect the pilot flow (21) to a return line (22) when the applied braking pressure exceeds the demand.

9. A system according to any one of the preceding claims wherein the braking system is a trailer braking system and the brake valve (4) is operable in response to the pressure applied to the tractor brakes.

**Patentansprüche**

1. Fahrzeugbremssystem, bei welchem ein Druckfluid zur Betätigung der Fahrzeugbremsen durch eine Pumpe (1) zugeführt wird, der Einrichtungen (2, 6) zugeordnet sind, um die Pumpenfördermenge zu reduzieren, wenn ein hoher Bremsdruck nicht erforderlich ist, dadurch gekennzeichnet, daß die Pumpenfördermenge zu einem Bremsventil (4) geführt wird, das den Bremsdruck steuert, und daß der Fördermengenstrom und der Druck der Pumpe so gesteuert werden, daß eine vorgegebene Differenz zwischen dem Pumpenförderdruck und dem Bremsdruck ungeachtet des Bremsdrucks aufrechterhalten wird.

2. System nach Anspruch 1, bei welchem die Einrichtungen (2, 6) einen drosselnden Durchflußregler (2), wodurch ein im wesentlichen konstanter Steuerstrom in einer Steuerleitung (21) zu dem Bremsventil (4) vorgesehen wird, und einen Schalter (3) in einer Hauptstromleitung (12) zu dem Bremsventil aufweist, der so betätigbar ist, daß der Hauptstrom unterbrochen wird, wenn der Druck des zum Bremsventil geförderten Fluids einen vorgegebenen Wert überschreitet.

3. System nach Anspruch 2, bei welchem die Pumpe (1) eine druck- und mengenkompensierte Pumpe der Bauweise ist, die eine vorgegebene Differenz zwischen dem Förderdruck (5) und dem Druck aufrechterhält, der an einer Steueröffnung anliegt, die mit der Steuerleitung (21) verbunden ist.

4. System nach Anspruch 3, bei welchem ein hydraulisches Hilfssystem oder hydraulische Hilfssysteme ebenfalls von der Pumpe (1) gespeist werden, eine Steuerstromleitung, die dem hydraulischen Hilfssystem oder den hydraulischen Hilfssystemen zugeordnet ist, mit dem Steuerstrom zum Bremsventil (4) über ein Rückschlagventil (16) verbunden ist, welches ansprechend auf ein Hochdrucksignal von dem Hilfssystem oder den Hilfssystemen schließt.

5. System nach einem der Ansprüche 2 bis 4, bei welchem der drosselnde Mengenregler (2) einen Steuerkolben aufweist, dessen gegenüberliegende Seiten über eine Steuerstromöffnung (13) in Verbindung stehen und der entgegen dem auf eine Seite des Steuerschiebers (2) wirkenden Druck in der Hauptstromleitung (12) stromauf vom Schalter (3) vorgespannt ist und eine Drosselöffnung (14) aufweist, die den Steuerstrom so mengenregelt, daß er im wesentlichen konstant gehalten wird.

6. System nach Anspruch 5, dadurch gekennzeichnet, daß der Hauptstrom (12) zusammen mit dem Steuerstrom (21) von der Drosselöffnung (14a) stromauf von der Steuerstromöffnung (13) mengengeregelt werden.

7. System nach Anspruch 5 oder Anspruch 6 in Verbindung mit Anspruch 3, wobei der einengende Mengenregler (2) eine Nebenstromöffnung (9) hat, die den Strom zu dem Hilfssystem oder zu den Hilfssystemen mengenregelt.

8. System nach einem der Ansprüche 2 bis 7, bei welchem die Bremsventileingangsleistung der Bremsanforderung (24) entspricht und an einem Steuerkolben (4) entgegengesetzt zu dem an den Bremsen (20) anliegenden Druck anliegt, wobei der Steuerkolben (4) so arbeitet, daß der Steuerstrom (21) mit einer Rückführleitung (22) verbunden wird, wenn der angelegte Bremsdruck die Anforderung übersteigt.

9. System nach einem der vorhergehenden Ansprüche, bei welchem das Bremssystem ein Abhängerbremssystem ist, und das Bremsventil (4) ansprechend auf den Druck arbeitet, der an den Zugfahrzeugbremsen anliegt.

**Revendications**

1. Système de freinage pour véhicule, dans lequel un fluide sous pression destiné à agir sur les freins d'un véhicule est délivré par une pompe (1) associée à des moyens (2, 6) destinés à réduire le débit de la pompe lorsqu'une pression élevée de freinage n'est pas requise, caractérisé en ce que le débit de la pompe est délivré vers une soupape (4) de frein contrôlant la pression de freinage, le débit et la pression de la pompe étant contrôlés de façon à maintenir un écart déterminé entre la pression de sortie de la pompe et la pression de freinage, quelle que soit cette pression de freinage.

2. Système selon la revendication 1 dans lequel lesdits moyens (2, 6) comprennent une soupape de contrôle restrictive de l'écoulement assurant un écoulement pilote sensiblement constant dans une ligne pilote (21) vers la soupape (4) de frein, et un commutateur (3) au niveau de la ligne (12) d'écoulement principal vers la soupape de frein, lequel commutateur (3) est manoeuvrable pour couper l'écoulement principal lorsque la pression de fluide délivrée vers la soupape de frein excéde une valeur déterminée.

3. Système selon la revendication 2 dans lequel la pompe (1) est une pompe compensée en écoulement et en pression du type qui maintient un écart déterminé entre la pression (5) qu'elle délivre et la pression qui est appliquée à un orifice de contrôle, lequel orifice de contrôle est connecté à ladite ligne (21) pilote.

4. Système selon la revendication 3 dans lequel un ou plusieurs système(s) hydraulique(s) auxiliaire(s) est/sont également alimenté(s) par la pompe (1), une ligne d'écoulement pilote associée au(x) système(s) hydraulique(s) auxiliaire(s) étant relié à l'écoulement pilote vers la soupape (4) de frein par l'intermédiaire d'une soupape (16) de contrôle qui se ferme en réponse à un signal de pression élevée issu du/des système(s) auxiliaire(s).

5. Système selon l'une quelconque des revendications 2 à 4 dans lequel une soupape (2) de contrôle restrictive de débit comprend un tiroir dont les côtés opposés communiquant par l'intermédiaire d'un orifice (13) d'écoulement pilote et qui est solicité en opposition à la pression établie dans la ligne (12) d'écoulement principal, en amont du commutateur (3) agissant sur un côté du tiroir (2) et comprenant un orifice (14) limiteur mesurant l'écoulement pilote de façon à maintenir cet écoulement pilote sensiblement constant.

6. Système selon la revendication 5 dans lequel l'écoulement (12) principal et l'écoulement (21) pilote sont tous deux mesurés par l'orifice (14a) limiteur, en amont de l'orifice (13) d'écoulement pilote.

7. Système selon la revendication 5 ou la revendication 6, sous la dépendance de la revendication 3, la soupape (2) de contrôle restrictive d'écoulement ayant un orifice (9) de dérivation mesurant l'écoulement du/des système(s) auxiliaire(s).

8. Système selon l'une quelconque des revendications 2 à 7 comprenant l'entrée de soupape de frein qui correspond à la demande (24) de freinage et est appliquée à un tiroir (4) en opposition à la pression appliquée sur les freins (20), le tiroir (4) étant manoeuvrable pour relier l'écoulement pilote (21) à une ligne retour (22) lorsque la pression de freinage appliquée excède la demande.

9. Système selon l'une quelconque des revendications précédentes dans lequel le système de freinage est un système de freinage d'une remorque et la soupape (4) de frein est manoeuvrable en réponse à la pression appliquée sur les freins du véhicule tracteur.

FIG.1

SECTION C-C

FIG.2

SECTION A-A

SECTION B-B

0 114 502

TO TRAILER
BRAKES

FIG. 3

TO AUXILIARY
VALVES